Europäisches Patentamt

European Patent Office

Office européen des brevets

(19)

(11) EP 0 658 993 B1

(12) **FASCICULE DE BREVET EUROPEEN**

(45) Date de publication et mention de la délivrance du brevet:
**09.08.2000  Bulletin 2000/32**

(51) Int. Cl.⁷: **H04L 1/20**, H04L 27/22

(21) Numéro de dépôt: **94402853.9**

(22) Date de dépôt: **12.12.1994**

(54) **Procédé de détection de décrochage de récupération de porteuse et de détermination du rapport Eb/No d'une liaison de transmission numérique et dispositif**

Verfahren und Vorrichtung zur Erkennung von falscher Trägerfrequenzwiedergewinnung und zur Bestimmung des Signal-Rausch-Verhältnisses Eb/No einer digitalen Übertragungsstrecke

Method and apparatus for false-lock detection in carrier recovery and for SNR estimation (Eb/No) of a digital communication link

(84) Etats contractants désignés:
**BE DE ES FR GB IT NL SE**

(30) Priorité:  **15.12.1993 FR 9315086**

(43) Date de publication de la demande:
**21.06.1995  Bulletin 1995/25**

(73) Titulaire: **ALCATEL TELSPACE**
**92734 Nanterre Cédex (FR)**

(72) Inventeurs:
• **Fargues, Alain**
  **F-78700 Conflans Ste Honorine (FR)**
• **Kimiavi, Mani**
  **F-75019 Paris (FR)**

(74) Mandataire: **Scheer, Luc et al**
**COMPAGNIE FINANCIERE ALCATEL**
**Département Propriété Industrielle**
**30, avenue Kléber**
**75116 Paris (FR)**

(56) Documents cités:
**US-A- 4 381 546**        **US-A- 4 555 790**
**US-A- 4 633 465**        **US-A- 4 827 431**
**US-A- 4 991 184**

EP 0 658 993 B1

**Description**

Le domaine de l'invention est celui des systèmes de transmission de signaux numériques à modulation de phase à au moins deux états de phase.

Le document US-A-4 555 790 décrit un dispositif de calcul du rapport signal à bruit pour un tel signal, le bruit étant calculé comme la valeur quadratique moyenne sur plusieurs échantillons de la différence entre les signaux reçus et les signaux optimaux correspondants aux points de la constellation de la modulation utilisée.

Plus précisément, la présente invention concerne un procédé et un dispositif de détermination du rapport Eb/No d'une liaison de communication (par exemple hertzienne), ce rapport correspondant au rapport de l'énergie par bit à la densité spectrale de bruit, proportionnel au taux d'erreur par bit (TEB). Le procédé est mis en oeuvre dans un modem récepteur de signaux numériques à pluralité de phases. L'invention peut notamment être utilisée pour détecter un décrochage de la récupération de porteuse.

On sait que la connaissance du rapport de l'énergie par bit à la densité spectrale de bruit, couramment noté Eb/No, ou alors le TEB, permet d'évaluer la qualité d'une transmission, par exemple celle d'un canal satellite par lequel transitent des communications. La connaissance de cette valeur permet notamment de corriger automatiquement, de manière auto-adaptative, les paramètres de l'ensemble de démodulation, par exemple la largeur de bande ou la pente du filtre de Nyquist de réception. Il peut également être intéressant d'afficher sur le récepteur le rapport Eb/No pour informer l'utilisateur de la qualité de la transmission et de celle de la démodulation réalisée dans son modem.

Dans les systèmes existants, la valeur de Eb/No est déduite du taux d'erreur par bit obtenu à l'aide de codeurs/décodeurs d'erreur de type Viterbi ou Reed Solomon. Cependant, la connaissance de la valeur de TEB nécessite un temps très important puisqu'elle requiert une intégration d'un grand nombre d'échantillons reçus. De plus, un codage/décodage d'erreurs peut masquer la véritable valeur de Eb/No et les modifications des paramètres de filtrage ne sont alors pas adéquates ou erronées.

La présente invention a notamment pour objectif de pallier ces inconvénients.

Plus précisément, un des objectifs de l'invention est de fournir un procédé de détermination rapide et fiable du rapport Eb/No d'un canal de transmission.

Un autre objectif est de fournir un tel procédé qui soit indépendant du type de liaison, de telle sorte qu'il s'applique que les données transmises et reçues soient codées ou non. En l'absence de codage, les algorithmes de Viterbi ou de Reed Solomon ne sont pas utilisés et il n'est alors pas possible de déterminer le rapport Eb/No. L'invention doit par exemple permettre de déterminer le rapport Eb/No d'une liaison non codée, par exemple d'une liaison différentielle.

Un autre objectif est de détecter un décrochage de récupération de porteuse.

Un objectif complémentaire est de fournir un dispositif mettant en oeuvre ce procédé.

Ces objectifs, ainsi que d'autres qui apparaîtront par la suite, sont atteints grâce à un procédé de détermination du rapport Eb/No d'une transmission numérique, le procédé étant appliqué à un signal à pluralité de phases constitué par deux trains de données en quadrature de phase fournissant à chaque temps symbole un échantillon reçu dont la position dans la constellation est définie par ses coordonnées obtenues par quantification des trains de données, ce procédé consistant à :

- déterminer le nombre d'échantillons reçus, appelés échantillons erronés, pendant un intervalle de temps déterminé, dont les coordonnées correspondent à celles d'échantillons témoins, les coordonnées des échantillons témoins étant différentes de celles d'échantillons reçus dans des conditions de transmission optimales, appelés échantillons optimaux ;
- calculer le rapport entre le nombre d'échantillons erronés et le nombre total d'échantillons reçus pendant cet intervalle de temps, ce rapport calculé étant inversement proportionnel à Eb/No.

**[0012]** Ainsi, en traitant les échantillons avant décision, il est possible de déterminer une valeur comparative à Eb/No par simple comparaison des échantillons reçus avec un certain nombre d'échantillons témoins.

Avantageusement, les échantillons témoins forment des zones de recueil, une des zones de recueil étant située au centre de la constellation, les autres zones de recueil étant chacune située entre deux des échantillons optimaux et le franchissement du rapport calculé d'une valeur de seuil prédéterminée génère un signal d'alarme indicatif d'une perte de fréquence porteuse.

Selon un autre arrangement, les échantillons témoins forment une zone de recueil unique située au centre de la constellation et le franchissement du rapport calculé d'une valeur de seuil prédéterminée génère un signal d'alarme indicatif d'une perte de fréquence porteuse éloignée.

Dans un autre cas de figure, les échantillons témoins correspondent à tous les échantillons de la constellation à l'exception des échantillons optimaux. Cet arrangement permet de fournir une valeur correspondant à un rapport Eb/No correspondant le plus à la réalité, c'est à dire réellement représentatif du bruit entachant le signal reçu.

Le procédé de l'invention peut notamment être appliqué à un signal de type MDP-M, M valant 2, 4, 8 ou plus.

L'invention concerne également un dispositif mettant en oeuvre un tel procédé, le dispositif recevant un signal à pluralité de phases constitué par deux trains de données en quadrature de phase constituant à chaque temps symbole un échantillon reçu dont la position dans la constellation est définie par ses coordonnées, obtenues par quantification des trains de données, ce dispositif comportant :

- des moyens de comptage du nombre d'échantillons reçus pendant un intervalle de temps déterminé, appelés échantillons erronés, dont les coordonnées correspondent à celles d'échantillons témoins, les coordonnées des échantillons témoins étant différentes des coordonnées de celles d'échantillons reçus dans des conditions de transmission optimales, appelés échantillons optimaux ;
- des moyens de calcul du rapport entre le nombre d'échantillons erronés et le nombre total d'échantillons reçus pendant cet intervalle de temps déterminé, ce rapport calculé étant inversement proportionnel à Eb/No.

**[0018]** D'autres caractéristiques et avantages apparaîtront à la lecture de la description suivante de modes de mise en oeuvre préférentiels de l'invention, donnés à titre illustratif et non limitatif, et des dessins annexés dans lesquels :

- la figure 1 est un schéma synoptique d'un étage de démodulation d'un récepteur de signal numérique modulé en phase, cet étage comprenant un dispositif de mesure de Eb/No selon la présente invention ;
- la figure 2 représente une constellation d'un signal de type MDP-4 où chaque échantillon est codé sur 4 bits, dont un bit de signe, en abscisse et en ordonnée, les échantillons témoins correspondant à tous les échantillons pouvant être reçus, à l'exception des échantillons optimaux ;
- la figure 3 représente une constellation d'un signal de type MDP-4 où les échantillons témoins forment des zones de recueil ;
- la figure 4 représente une constellation d'un signal de type MDP-8 où chaque échantillon est codé sur 4 bits, dont un bit de signe, en abscisse et en ordonnée ;
- la figure 5 représente une constellation d'un signal de type MDP-8 où chaque échantillon est codé sur 5 bits, dont un bit de signe, en abscisse et en ordonnée ;
- la figure 6 est un schéma synoptique d'un mode de réalisation préférentiel de l'invention.

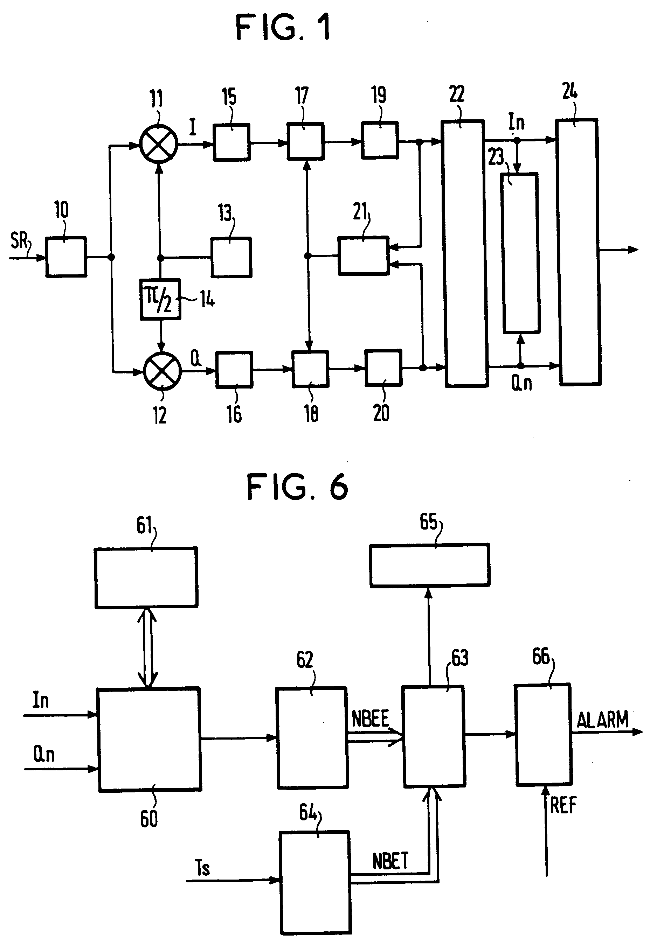

Le schéma de la figure 1 correspond essentiellement à celui décrit dans la demande de brevet français n°93.00051 déposée le 6 janvier 1993 au nom du même déposant. L'étage de démodulation est entièrement numérique. Bien entendu, l'invention s'applique également à un démodulateur utilisant une boucle analogique de récupération de porteuse, telle qu'une boucle de Costas classique.

Un signal reçu, noté SR, est appliqué à l'entrée d'un filtre passe-bande 10 en fréquence intermédiaire suivi de deux multiplicateurs 11, 12 qui multiplient le signal issu du filtre 10 par deux signaux en quadrature de phase. Un de ces signaux est directement issu d'un oscillateur local 13 et l'autre d'un déphaseur 14 de π/2. L'oscillateur local 13 génère un signal de même fréquence que la fréquence centrale du signal reçu SR. Les signaux de sortie des multiplieurs 11, 12 constituent deux composantes en quadrature de phase I et Q l'une par rapport à l'autre. Ces signaux I et Q sont appliqués à des filtres passe-bas anti-repliement 15, 16 suivis de convertisseurs analogique/numériques 17, 18 fournissant deux composantes numériques en quadrature. Les convertisseurs 17, 18 sont suivis de filtres passe-bas 19, 20 en racine de Nyquist dont les sorties sont appliquées à un module de récupération de rythme 21 fournissant le signal d'horloge pilotant les convertisseurs 17, 18. Un dispositif de récupération de porteuse numérique 22 reçoit également les signaux de sortie des filtres 19, 20.

La fonction du dispositif de récupération de porteuse numérique 22 est d'assurer une rotation de la constellation des états de phase du signal reçu en fonction d'une information représentative du décalage angulaire de la constellation. Dans la demande susmentionnée, le dispositif 22 est constitué par un dispositif de calage de phase. L'étage de démodulation peut également être de type analogique et comporter un dispositif de récupération de porteuse de type boucle de Costas agissant directement sur l'oscillateur local 13.

Le dispositif 22 fournit deux trains In, Qn de données numériques en quadrature de phase constituant à chaque temps symbole Ts un échantillon reçu. La position dans la constellation de chaque échantillon est définie par ses coordonnées obtenues par la quantification des trains de données analogiques I et Q. Cette quantification peut par exemple s'opérer sur 7 bits dont un bit de signe, comme il sera vu par la suite. Les coordonnées In et Qn de chaque échantillon permettent de déterminer sa position dans la constellation. En l'absence de bruit, dans une modulation à M états de phase (MDP-M), les échantillons reçus vont pouvoir prendre seulement M positions dans le plan de phase, chacune de ces positions correspondant à celle d'un échantillon appelé par la suite échantillon optimal.

Le dispositif 22 fournit les trains numériques à un dispositif 23 de mesure du rapport Eb/No selon l'invention et à un module de décision 24 qui associe un symbole à chaque couple de composantes en quadrature du signal reçu et fournit les données démodulées. En modulation MDP-4, deux données sont extraites de chaque échantillon.

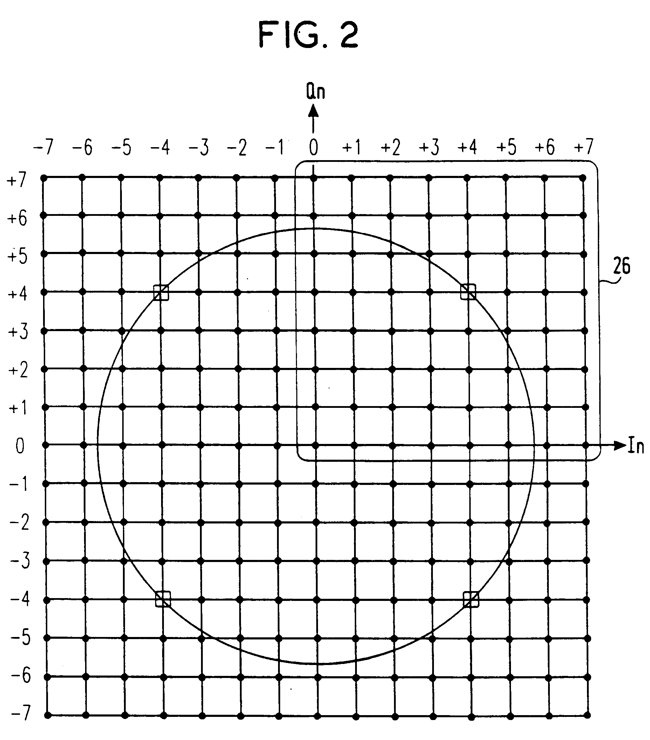

La figure 2 représente une constellation d'un signal de type MDP-4 où chaque échantillon est codé sur 4 bits dont un bit de signe en abscisse (composante en phase In) et en ordonnée (composante en quadrature Qn). Il est ainsi possible de situer chaque échantillon dans la constellation, sa position étant d'autant plus précise que le nombre de bits de codage est important.

Les échantillons optimaux sont représentés par des carrés et se situent sur un cercle dont le centre a comme coordonnées (0,0). Ces échantillons optimaux sont ceux qui devraient être reçus en l'absence de bruit et lorsque le dispositif de récupération de porteuse 22 fonctionne parfaitement.

En revanche, lorsque la récupération de porteuse est défaillante (glissement de phase ou perte de fréquence porteuse) ou alors la liaison perturbée par trop de bruit, les échantillons reçus ne correspondent plus aux échantillons optimaux attendus. L'invention propose justement de compter le nombre d'échantillons reçus qui ne correspondent pas à ces échantillons optimaux pour déterminer une grandeur inversement proportionnelle au rapport Eb/No.

**[0027]** A cet effet, l'invention propose de déterminer le nombre d'échantillons reçus pendant un intervalle de temps déterminé, appelés échantillons erronés, dont les coordonnées correspondent à celles d'échantillons témoins, les coordonnées de ces échantillons témoins étant différentes de celles des échantillons optimaux, et de calculer ensuite le rapport entre le nombre d'échantillons erronés et le nombre total d'échantillons reçus pendant cet intervalle de temps. Ce rapport est inversement proportionnel à Eb/No.

**[0028]** La meilleure solution pour déterminer le rapport Eb/No consiste à compter tous les échantillons reçus dont les coordonnées sont différentes de celles des échantillons optimaux. Sur la figure 2 et les autres figures représentant des constellations, les échantillons témoins sont représentés par des points.

En référence à la figure 2, les échantillons optimaux portent les coordonnées (4,4), (-4,4), (-4,-4) et (4,-4) et les échantillons témoins que l'on compte sont tous les autres échantillons reçus. Dans ces conditions, en notant NBEE le nombre d'échantillons erronés reçus et NBEO le nombre d'échantillons optimaux reçus, le rapport Eb/No est directement inversement proportionnel à $\frac{NBEE}{NBEE + NBEO}$ puisque NBEE+NBEO correspond au nombre total d'échantillons reçus dans l'intervalle de temps considéré. On obtient ainsi rapidement une estimation très fiable du rapport Eb/No, par exemple après avoir reçu 100 échantillons.

On notera au passage que NBEE est égal à NBET-NBEO où NBET est le nombre total d'échantillons reçus dans l'intervalle de temps déterminé. Il est donc équivalent de compter le nombre d'échantillons optimaux reçus et le nombre total d'échantillons reçus pour la détermination de Eb/No. Il est en effet plus simple de comparer chaque échantillon reçu avec quatre échantillons optimaux possibles que de comparer chaque échantillon reçu avec les échantillons témoins (qui sont beaucoup plus nombreux). Cette solution sera donc préférée dans la réalisation pratique du dispositif selon l'invention comme il sera vu par la suite.

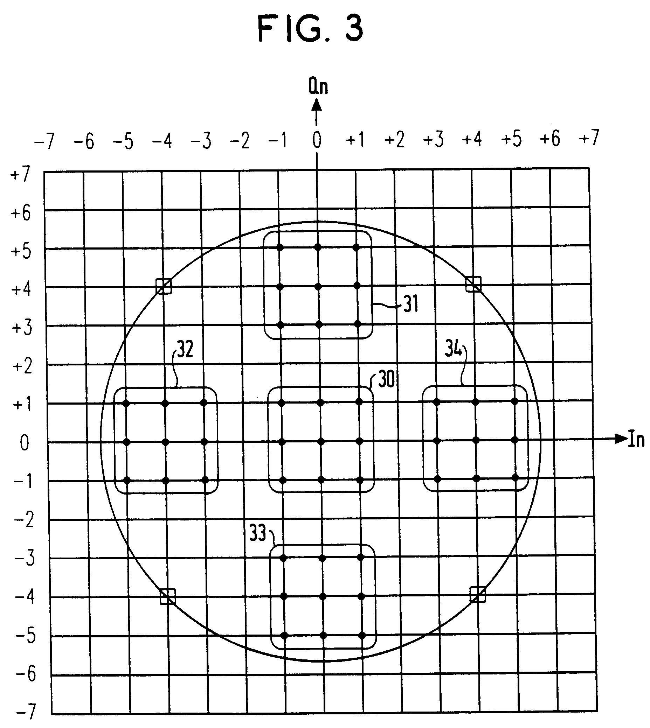

La figure 3 représente une constellation d'un signal de type MDP-4 où les échantillons témoins forment des zones de recueil référencées 30 à 34. Les échantillons optimaux sont les mêmes que ceux de la figure 2. Le nombre d'échantillons témoins retenu résulte d'un compromis entre une estimation acceptable du rapport Eb/No et la détection d'échantillons caractéristiques de deux phénomènes : ceux significatifs d'une récupération de porteuse proche et ceux significatifs d'une récupération de porteuse éloignée.

On sait que lorsque la récupération de porteuse est éloignée, on observe une convergence des échantillons reçus vers le centre de la constellation, c'est à dire que les échantillons reçus se situent dans la zone de recueil 30. En prévoyant un comptage des échantillons reçus dans la zone 30, on peut donc détecter que la récupération de porteuse est éloignée (écart de fréquence important entre la fréquence de l'oscillateur local et celle de la porteuse du signal reçu).

D'autre part, une récupération de porteuse proche se traduit par une rotation de la constellation à proximité du cercle sur lequel sont placés les échantillons optimaux. En prévoyant un comptage des échantillons reçus dans les zones 31 à 34, on peut donc détecter que la récupération de porteuse est proche.

Les deux comptages précédents peuvent être indépendants les uns des autres ou alors combinés, c'est à dire que l'on n'établit pas de différence entre les échantillons reçus dans la zone de recueil 30 de ceux reçus dans les zones 31 à 34. Un seul compteur est alors nécessaire et le franchissement du rapport Eb/No calculé d'une valeur de seuil prédéterminée génère un signal d'alarme indicatif d'une perte de fréquence porteuse. Si au contraire deux compteurs indépendants sont prévus, le franchissement du rapport calculé pour la zone de recueil 30 d'une valeur de seuil prédéterminée génère un signal d'alarme indicatif d'une perte de fréquence porteuse éloignée, alors que le franchissement du rapport calculé pour les zones de recueil 31 à 34 d'une valeur de seuil prédéterminée génère un signal d'alarme indicatif d'une perte de fréquence porteuse proche.

On notera que les zones de recueil 31 à 34 sont situées chacune entre deux échantillons optimaux et que tous les échantillons témoins sont situés à l'intérieur du cercle sur lequel se situent les échantillons optimaux. Les inventeurs ont en effet constaté que cette réalisation constitue une solution optimale dans la mesure où le nombre d'échantillons témoins est limité et où une bonne estimation du rapport Eb/No peut être effectuée en vue d'une détection de perte de fréquence porteuse.

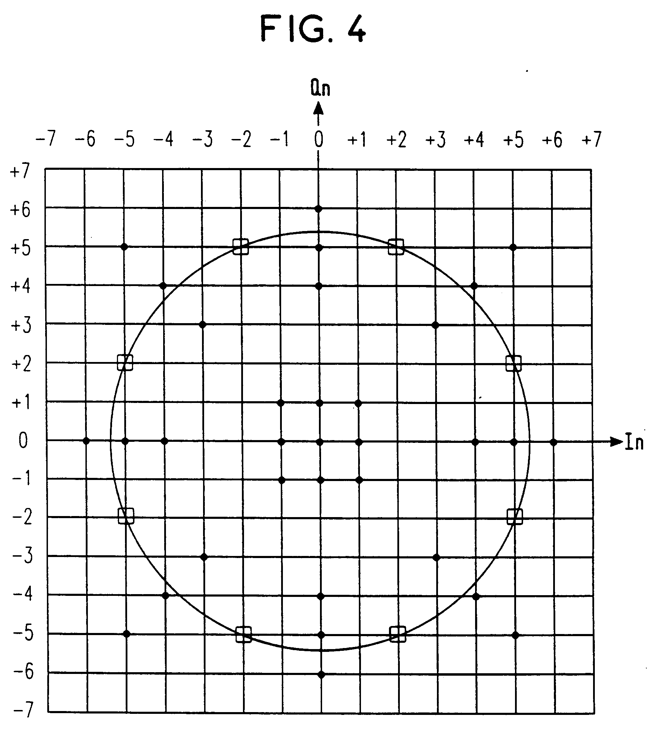

La figure 4 représente une constellation d'un signal de type MDP-8 où chaque échantillon est codé sur 4 bits dont un bit de signe en abscisse et en ordonnée. Huit échantillons optimaux sont ici définis et les échantillons témoins forment des zones de recueil. Une zone de recueil est située au centre de la constellation, les autres zones de recueil étant chacune située entre deux des échantillons optimaux.

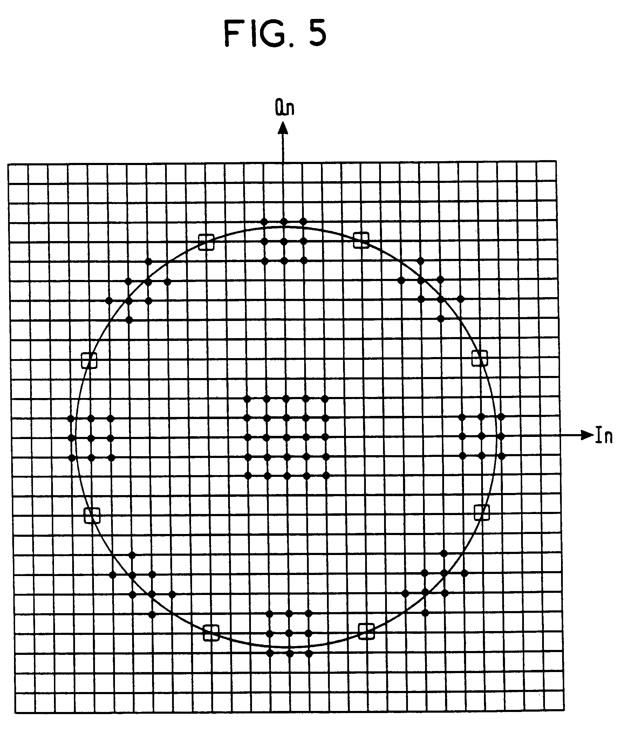

La figure 5 représente une constellation d'un signal de type MDP-8 où chaque échantillon est codé sur 5 bits dont un bit de signe, en abscisse et en ordonnée. On obtient ainsi une précision plus importante. Les échantillons témoins peuvent être choisis différemment en fonction de ce qu'on désire mesurer. Si l'on privilégie la connaissance du rapport Eb/No, on aura intérêt à prendre le plus grand nombre d'échantillons témoins possibles, comme montré en référence à la figure 1, alors qu'une détection de perte de fréquence de référence (proche ou éloignée) nécessite de ne pas prendre en compte un nombre trop important d'échantillons témoins.

L'invention est applicable à toutes les modulations à amplitude constante (MDP-M avec ou sans offset et M valant 2, 4, 8 ou plus ou alors MSK). L'invention s'applique également, mais dans une moindre mesure, aux modulations de type MDAP-M (modulations de phase et d'amplitude à M états de phase).

La figure 6 est un schéma synoptique d'un mode de réalisation préférentiel de l'invention. Le dispositif comporte essentiellement des moyens de comptage 62 du nombre d'échantillons erronés reçus pendant un intervalle de temps déterminé et des moyens de calcul 63 du rapport entre le nombre d'échantillons erronés comptés et le nombre total d'échantillons reçus pendant cet intervalle de temps.

Les composantes numériques en phase In et en quadrature Qn de chaque échantillon sont appliquées à un comparateur numérique 60 raccordé à une mémoire 61 contenant les coordonnées des échantillons témoins retenus. Comme indiqué précédemment, si le dispositif de l'invention a pour seule fonction de déterminer le rapport Eb/No de la transmission concernée, la mémoire 61 contient les coordonnées de tous les échantillons pouvant être reçus, à l'exception de celles des échantillons optimaux. Chaque échantillon reçu In, Qn est comparé avec le contenu de la mémoire 61. Si l'échantillon reçu est un échantillon témoin, le comparateur 60 génère un signal qui augmente de 1 le contenu du compteur 62. A la fin de l'intervalle de temps de mesure, le contenu du compteur 62, correspondant au nombre NBEE d'échantillons erronés comptés, est fourni aux moyens de calcul 63 recevant par ailleurs le nombre total d'échantillons reçus NBET d'un compteur 64 incrémenté au rythme symbole Ts. Les moyens de calcul 63 calculent le rapport NBEE/NBET inversement proportionnel à Eb/No. Ce rapport peut être fourni à des moyens d'affichage 65 et/ou exploité pour modifier les caractéristiques de l'étage de démodulation.

Comme précisé précédemment, il est également possible de ne mémoriser dans la mémoire 61 que les coordonnées des échantillons optimaux et dans ce cas les moyens de calcul 63 calculent le rapport (NBET-NBEO)/NBET. La vitesse de traitement est alors plus importante et l'encombrement mémoire moindre.

En complément de l'indication de Eb/No, le rapport calculé par les moyens de calcul 63 peut être comparé, à l'aide d'un comparateur 66, avec une valeur de seuil REF prédéterminée correspondant à un rapport Eb/No minimal toléré. Le dépassement de cette valeur REF génère un signal d'alarme ALARM indicatif d'une perte de fréquence porteuse (proche si les échantillons témoins situés à la périphérie du cercle de la constellation sont pris en compte ou alors éloignée si les échantillons témoins situés au centre de la constellation sont comptés).

Il va de soi que d'autres modes de réalisation sont possibles et le traitement des échantillons reçus peut également être effectué par une PROM (Programmable Read Only Memory).

Le traitement des échantillons reçus peut notamment être simplifié en ne traitant qu'une partie des échantillons reçus. A titre d'exemple, si chaque échantillon est codé sur 7x7 bits dont un bit de signe, on peut supprimer les deux bits de poids le plus faible (arrondi) puis procéder à un "repliement" de la constellation en abandonnant pour chaque composante le bit de poids le plus fort (bit de signe). On passe ainsi à 4x4 bits de codage de chaque échantillon, les échantillons étant alors traités sur seulement un quart de la constellation (où toutes les coordonnées sont positives). Cette zone de traitement effective est référencée 26 sur la figure 2.

Bien entendu, cette description n'a été donnée qu'à titre illustratif et d'autres modes de mise en oeuvre et de réalisation sont à la portée de l'homme du métier, sans pour autant sortir du cadre de la présente invention.

**Revendications**

**1.** Procédé de détermination du rapport de l'énergie par bit à la densité spectrale de bruit Eb/No d'une transmission numérique, ledit procédé étant appliqué à un signal à pluralité de phases constitué par deux trains (I, Q) de données en quadrature de phase fournissant à chaque temps symbole (Ts) un échantillon reçu dont la position dans la constellation est définie par ses coordonnées (In, Qn) obtenues par quantification desdits trains de données (I, Q), caractérisé en ce qu'il consiste à :

- déterminer le nombre d'échantillons reçus (NBEE), appelés échantillons erronés, pendant un intervalle de temps déterminé, dont les coordonnées correspondent à celles d'échantillons témoins, les coordonnées desdits échantillons témoins étant différentes de celles d'échantillons reçus dans des conditions de transmission optimales, appelés échantillons optimaux ;

- calculer le rapport entre ledit nombre d'échantillons erronés (NBEE) et le nombre total d'échantillons reçus (NBET) pendant cet intervalle de temps déterminé, ce rapport calculé étant inversement proportionnel à Eb/No.

2. Procédé selon la revendication 1, caractérisé en ce que lesdits échantillons témoins forment des zones de recueil (30 à 34), une desdites zones de recueil (30) étant située au centre de ladite constellation, les autres zones de recueil (31 à 34) étant chacune située entre deux desdits échantillons optimaux et en ce que le franchissement dudit rapport calculé d'une valeur de seuil prédéterminée (REF) génère un signal d'alarme (ALARM) indicatif d'une perte de fréquence porteuse.

3. Procédé selon la revendication 1, caractérisé en ce que lesdits échantillons témoins forment une zone de recueil (30) unique située au centre de ladite constellation et en ce que le franchissement dudit rapport calculé d'une valeur de seuil prédéterminée (REF) génère un signal d'alarme (ALARM) indicatif d'une perte de fréquence porteuse éloignée.

4. Procédé selon la revendication 1, caractérisé en ce que lesdits échantillons témoins correspondent à tous les échantillons de ladite constellation à l'exception desdits échantillons optimaux.

5. Procédé selon l'une des revendications 1 à 4, caractérisé en ce qu'il est appliqué à un signal de type à modulation de phase à M états de phase MDP-M, M valant 2, 4, 8 ou plus.

6. Dispositif de détermination du rapport de l'énergie par bit à la densité spectrale de bruit Eb/No d'une transmission numérique, caractérisé en ce qu'il reçoit un signal à pluralité de phases constitué par deux trains (I, Q) de données en quadrature de phase constituant à chaque temps symbole (Ts) un échantillon reçu dont la position dans la constellation est définie par ses coordonnées (In, Qn), obtenues par quantification desdits trains de données (I, Q), et en ce qu'il comporte :

- des moyens de comptage (62) du nombre d'échantillons reçus pendant un intervalle de temps déterminé, appelés échantillons erronés, dont les coordonnées correspondent à celles d'échantillons témoins, les coordonnées desdits échantillons témoins étant différentes des coordonnées de celles d'échantillons reçus dans des conditions de transmission optimales, appelés échantillons optimaux ;

- des moyens de calcul (63) du rapport entre ledit nombre d'échantillons erronés (NBEE) et le nombre total d'échantillons reçus (NBET) pendant cet intervalle de temps déterminé, ce rapport calculé étant inversement proportionnel à Eb/No.

7. Dispositif selon la revendication 6, caractérisé en ce que lesdits échantillons témoins forment des zones de recueil (30 à 34), une desdites zones de recueil (30) étant située au centre de ladite constellation, les autres zones de recueil (31 à 34) étant chacune située entre deux desdits échantillons optimaux et en ce qu'il comporte des moyens de comparaison (66) dudit rapport calculé avec une valeur de seuil prédéterminée (REF) pour générer un signal d'alarme (ALARM) indicatif d'une perte de fréquence porteuse lorsque ledit rapport calculé excède ladite valeur de seuil prédéterminée (REF).

8. Dispositif selon la revendication 6, caractérisé en ce que lesdits échantillons témoins forment une zone de recueil unique (30) située au centre de ladite constellation et en ce qu'il comporte des moyens de comparaison (66) dudit rapport calculé avec une valeur de seuil prédéterminée (REF) pour générer un signal d'alarme (ALARM) indicatif d'une perte de fréquence porteuse éloignée lorsque ledit rapport calculé excède ladite valeur de seuil prédéterminée (REF).

9. Dispositif selon la revendication 6, caractérisé en ce que lesdits échantillons témoins correspondent à tous les échantillons de ladite constellation à l'exception desdits échantillons optimaux.

10. Dispositif selon l'une des revendications 6 à 9, caractérisé en ce que ledit signal à pluralité de phases est de type à modulation de phase à M états de phase MDP-M où M vaut 2, 4, 8 ou plus.

**Claims**

1. Process of determining the ratio of the energy per bit to the noise spectral density Eb/No of a digital transmission, said process being applied to a signal having a plurality of phases made up of two data streams in phase quadrature providing in each symbol time (Ts) a received sample whose position in the constellation is defined by its coordinates (In, Qn) obtained by quantizing said data streams (I, Q), characterized in that the process consists in:

- determining the number of erroneous samples received (NBEE) during a given time period whose coordinates correspond to those of indicative samples, the coordinates of said indicative samples being different from those of optimum samples received under optimum transmission conditions; and

- calculating the ratio between said number of erroneous samples (NBEE) and the total number of samples received (NBET) in said given time period, the calculated ratio being inversely proportional to the Eb/No ratio.

2. Process according to claim 1 characterized in that said indicative samples form collection areas (30 through 34), one of said collection areas (30) being situated at the centre of said constellation, the other collection areas (31 through 34) each being between two of said optimum samples, and in that said calculated ratio crossing a predetermined threshold value (REF) generates an alarm signal (ALARM) indicative of carrier frequency loss.

3. Process according to claim 1 characterized in that said indicative samples form a single collection area (30) at the centre of said constellation and in that said calculated ratio crossing a predetermined threshold value (REF) generates an alarm signal (ALARM) indicative of remote carrier frequency loss.

4. Process according to claim 1 characterized in that said indicative samples are all the samples of said constellation with the exception of said optimum samples.

5. Process according to any of claims 1 to 4 characterized in that it is applied to a phase modulated (MDP-M) signal with M = 2, 4, 8 or more phase states.

6. Device for determining the ratio of the energy per bit to the noise spectral density Eb/No of a digital transmission, characterized in that it receives a signal with a plurality of phases comprising two data streams (I, Q) in phase quadrature constituting in each symbol time (Ts) a received sample whose position in the constellation is defined by its coordinates (In, Qn) obtained by quantizing said data streams (I, Q), and in that it includes:

- means (62) for counting the number of erroneous samples received in a given time period whose coordinates correspond to those of indicative samples, the coordinates of said indicative samples being different from the coordinates of optimum samples received under optimum transmission conditions; and
- means (63) for calculating the ratio between said number of erroneous samples (NBEE) and the total number of samples received (NBET) during said given time period, the calculated ratio being inversely proportional to the Eb/No ratio.

7. Device according to claim 6 characterized in that said indicative samples form collection areas (30 through 34), one of said collection areas (30) being situated at the centre of said constellation, the other collection areas (31 through 34) each being between two of said optimum samples, and in that it includes means (66) for comparing said calculated ratio with a predetermined threshold value (REF) to generate an alarm signal (ALARM) indicative of carrier frequency loss if said calculated ratio exceeds said predetermined threshold value (REF).

8. Device according to claim 6 characterized in that said indicative samples form a single collection area (30) at the centre of said constellation and in that it includes means (66) for comparing said calculated ratio with a predetermined threshold value (REF) to generate an alarm signal (ALARM) indicative of remote carrier frequency loss if said calculated ratio exceeds said predetermined threshold value (REF).

9. Device according to claim 6 characterized in that said indicative samples are all the samples of said constellation with the exception of said optimum samples.

10. Device according to any of claims 6 to 9 characterized in that said signal with a plurality of phase states is a phase modulated (MDP-M) signal with M = 2, 4, 8 or more phase states.

**Patentansprüche**

1. Verfahren zum Bestimmen des Verhältnisses der Energie pro Bit zur spektralen Rauschdichte Eb/No einer digitalen Übertragung, welches Verfahren auf ein Signal mit einer Mehrzahl von Phasen, gebildet durch zwei Züge (I, Q) von Daten in Phasenquadratur angewendet wird, die zu jeder Symbolzeit (Ts) einen empfangenen Abtastwert liefern, dessen Position in der Konstellation durch seine durch Quantisierung der Datenzüge (I, Q) erhaltenen Koordinaten (In, Qn) definiert ist, dadurch gekennzeichnet, dass es darin beruht,

- die Zahl von empfangenen Abtastwerten (NBEE), als fehlerhafte Abtastwerte bezeichnet, während eines vorgegebenen Zeitintervalls zu bestimmen, deren Koordinaten denen von Vergleichsabtastwerten entsprechen, wobei die Koordinaten dieser Vergleichsabtastwerte von jenen von Abtastwerten verschieden sind, die unter optimalen Übertragungsbedingungen empfangen werden und als optimale Abtastwerte bezeichnet werden;

- das Verhältnis zwischen der Zahl von fehlerhaften Abtastwerten (NBEE) und der Gesamtzahl von empfangenen Abtastwerten (NBET) während dieses vorgegebenen Zeitintervalls berechnet wird, wobei das berechnete Verhältnis zu Eb/No umgekehrt proportional ist.

2. Verfahren nach Anspruch 1, dadurch gekennzeichnet, dass die sogenannten Vergleichsabtastwerte Auffangzonen (30 bis 34) bilden, wobei eine der Auffangzonen (30) in der Mitte der Konstellation und die anderen Auffangzonen (31 bis 34) jeweils zwischen zweien der optimalen Abtastwerte angeordnet sind, und dass die Überschreitung eines vorgegebenen Schwellwerts (REF) durch das berechnete Verhältnis ein Alarmsignal (ALARM) auslöst, das auf einen Verlust einer Trägerfrequenz hinweist.

3. Verfahren nach Anspruch 1, dadurch gekennzeichnet, dass die Vergleichsabtastwerte eine einzige in der Mitte der Konstellation angeordnete Auffangzone (30) bilden, und dass die Überschreitung eines vorgegebenen Schwellwerts (REF) durch das berechnete Verhältnis ein Alarmsignal (ALARM) auslöst, das auf einen Verlust einer entfernten Trägerfrequenz hinweist.

4. Verfahren nach Anspruch 1, dadurch gekennzeichnet, dass die Vergleichsabtastwerte allen Abtastwerten der Konstellation mit Ausnahme der optimalen Abtastwerte entsprechen.

5. Verfahren nach einem der Ansprüche 1 bis 4, dadurch gekennzeichnet, dass es auf ein Signal vom Typ mit Phasenmodulation mit M Phasenzuständen MDP-M angewendet wird, wobei M 2,4, 8 oder mehr beträgt.

6. Vorrichtung zum Bestimmen des Verhältnisses der Energie pro Bit zur spektralen Rauschdichte Eb/No einer digitalen Übertragung, dadurch gekennzeichnet, dass sie ein Signal mit einer Mehrzahl von Phasen, gebildet durch zwei Züge (I, Q) von Daten in Phasenquadratur empfängt, die zu jeder Symbolzeit (Ts) einen empfangenen Abtastwert bilden, dessen Position in der Konstellation durch seine durch Quantisierung der Datenzüge (I, Q) erhaltenen Koordinaten (In, Qn) definiert ist, und dass sie umfasst:

- Zählmittel (62) für die Zahl von während eines vorgegebenen Zeitintervalls empfangenen Abtastwerten, als fehlerhafte Abtastwerte bezeichnet, deren Koordinaten denen von Vergleichsabtastwerten entsprechen, wobei die Koordinaten dieser Vergleichsabtastwerte von jenen von Abtastwerten verschieden sind, die unter optimalen Übertragungsbedingungen empfangen werden und als optimale Abtastwerte bezeichnet werden;

- Rechenmittel (63) zum Berechnen des Verhältnisses zwischen der Zahl von fehlerhaften Abtastwerten (NBEE) und der Gesamtzahl von empfangenen Abtastwerten (NBET) während dieses vorgegebenen Zeitintervalls, wobei dieses berechnete Verhältnis umgekehrt proportional zu Eb/No ist.

7. Vorrichtung nach Anspruch 6, dadurch gekennzeichnet, dass die Vergleichsabtastwerte Auffangzonen (30 bis 34) bilden, wobei eine der Auffangzonen (30) in der Mitte der Konstellation und die anderen Auffangzonen jeweils zwischen zweien der optimalen Abtastwerte angeordnet sind, und dass sie Vergleichsmittel (66) zum Vergleichen des berechneten Verhältnisses mit einem vorgegebenen Schwellwert (REF) umfasst, um ein auf einen Verlust einer Trägerfrequenz hinweisendes Alarmsignal (ALARM) zu erzeugen, wenn das berechnete Verhältnis den vorgegebenen Schwellwert (REF) überschreitet.

8. Vorrichtung nach Anspruch 6, dadurch gekennzeichnet, dass die Vergleichsabtastwerte eine einzige in der Mitte der Konstellation angeordnete Auffangzone (30) bilden, und dass sie Vergleichsmittel (66) zum Vergleichen des berechneten Verhältnisses mit einem vorgegebenen Schwellwert (REF) umfasst, um ein Alarmsignal (ALARM) zu erzeugen, das auf einen Verlust einer entfernten Trägerfrequenz hinweist, wenn das berechnete Verhältnis den vorgegebenen Schwellwert (REF) überschreitet.

9. Vorrichtung nach Anspruch 6, dadurch gekennzeichnet, dass die Vergleichsabtastwerte allen Abtastwerten der Konstellation mit Ausnahme der optimalen Abtastwerte entsprechen.

10. Vorrichtung nach einem der Ansprüche 6 bis 9, dadurch gekennzeichnet, dass das Signal mit mehreren Phasen vom Typ mit Phasenmodulation mit M Phasenzuständen MDP-M ist, wobei M 2, 4, 8 oder mehr beträgt.

# FIG. 1

# FIG. 6

# FIG. 2

# FIG. 3

# FIG. 4

# FIG. 5